# EUROPEAN PATENT SPECIFICATION

(11) **EP 3 458 495 B1**
(45) Date of publication and mention of the grant of the patent: **05.08.2020**
(21) Application number: 17722044.9
(22) Date of filing: 11.05.2017
(51) Int. Cl.: C08G 65/331, C08G 65/332, C08L 71/02, C04B 24/30, C04B 28/00, C04B 28/04, C04B 28/08

(54) **FORMULATION FOR THE PRODUCTION OF ACID AND HEAT-RESISTANT CONSTRUCTION PRODUCTS**
FORMULIERUNG ZUR HERSTELLUNG VON SÄURE- UND HITZEBESTÄNDIGEN KONSTRUKTIONSPRODUKTEN
FORMULATION POUR LA PRODUCTION D'ACIDE ET PRODUITS DE CONSTRUCTION RÉSISTANT À LA CHALEUR

(30) Priority: 17.05.2016 EP 16169979
(43) Date of publication of application: 27.03.2019
(73) Proprietor: Construction Research & Technology GmbH, 83308 Trostberg (DE)
(72) Inventor: PULKIN, Maxim, 83308 Trostberg (DE); MITKINA, Tatiana, 83308 Trostberg (DE)
(74) Representative: BASF IP Association
(86) International application number: PCT/EP2017/061296
(87) International publication number: WO 2017/198531

(56) References cited:
- WO-A1-2013/152963
- US-A1- 2012 024 196

## Description

The present invention relates to a novel formulation and to the use of this formulation for the production of construction products with improved acid and heat resistance.

Portland cement was first mentioned in British patent BP 5022 and has since been continuously further developed. Modern Portland cement contains about 70% by weight of CaO + MgO, about 20% by weight of SiO₂ and about 10% by weight of Al₂O₃ + Fe₂O₃. Owing to its high CaO content, it hardens hydraulically. Hardened Portland cement is alkali-resistant but not acid-resistant.

As latent hydraulic binders, certain slags from metallurgical processes can be activated with strong alkalis, such as, for example, waterglasses or alkali hydroxides, or can be used as admixtures to Portland cement. By mixing with fillers (quartz sand or aggregate having a corresponding grain size) and additives, they can be used as mortars or concretes. Blast furnace slag, a typical latent hydraulic binder, has as a rule 30 to 45% by weight of CaO, about 4 to 17% by weight of MgO, about 30 to 45% by weight of SiO₂ and about 5 to 15% by weight of Al₂O₃, typically about 40% by weight of CaO, about 10% by weight of MgO, about 35% by weight of SiO₂ and about 12% by weight of Al₂O₃. Activated latent hydraulic binders generally harden hydraulically, i.e. through crystallization.

Hydraulically hardened systems regularly exhibit a high compressive strength but often very low resistance towards acids.

Inorganic binder systems based on reactive water-insoluble oxides based on SiO₂ in combination with Al₂O₃, which harden in an aqueous alkaline medium, are generally known. Such binder systems are also referred to as geopolymers and are described, for example, in US 4,349,386, WO 85/03699 and US 4,472,199. Such systems comprise as a rule 50 to 60% by weight of SiO₂, 20 to 25% by weight of Al₂O₃, no CaO and 15 to 30% by weight of M₂O (M = Na, K).

Metakaolin, slag, fly ash, calcined clay or mixtures thereof may be used as reactive oxide mixture. The alkaline medium for activating the binder usually consists of aqueous solutions of alkali metal carbonates, alkali metal fluorides, alkali metal aluminates, alkali metal hydroxides and/or soluble waterglass. Also alkali metals sulfates may be used. The hardened binders have high mechanical stability. In comparison with cement, they may be more economical and more resistant to chemicals and fire and may have a more advantageous CO₂ emission balance.

WO 08/012438 describes a further geopolymer cement based on low-CaO fly ash class F, blast furnace slag and aqueous alkali metal silicate having a SiO₂:M₂O ratio of more than 1.28, preferably of more than 1.45. In the examples calculated on the basis of anhydrous oxides, about 45 to 50% by weight of SiO₂, about 20 to 26% by weight of Al₂O₃, about 9 to 10% by weight of CaO and about 3 to 4% by weight of K₂O are present.

Our WO 2011/064005 A1 (corresponding to EP 2504296 B1) describes a novel inorganic binder system, the use of that binder system for the production of a hydraulically setting mortar, and a mortar which contains that binder system. The binder system hardens in the form of a hybrid matrix which is acid-resistant, water-resistant and alkali-resistant. However, no useful dispersants for that system have been disclosed.

Our WO 2013/152963 A1 (corresponding to EP 2836529 A1) describes a polycondensation product comprising, as monomer components, at least one aryl polyoxyalkylene ether, at least one vicinally disubstituted aromatic compound, at least one aldehyde, and optionally further aromatic compounds. The invention also relates to a method for the preparation thereof, and to the use as a dispersant for aqueous suspensions of alternative inorganic binders. However, when it comes to alkali metal silicates as activators, the workability improvement is very poor (cf. Example 16 of WO 2013/152963 A1).

Moreover, L. Nicoleau, M. Pulkin and T. Mitkina in "PLASTICIZING GEOPOLYMER-TYPE SUSPENSIONS: A CHALLENGE", CANMET 2015), report that anionic polycondensation products work very poorly in the presence of alkali silicates ("[i]ndeed, the plasticizing efficiency decreases when the binder is a class F fly-ash instead of a slag, and, drops dramatically when an alkali-silicate activator is used instead of KOH."; p.479, 1.36-38.)

The inventors have set themselves the object of substantially avoiding at least some of the disadvantages of the prior art as discussed above. In particular, it was the object of the invention to provide a formulation exhibiting at least some of the following properties: high flowability, even if alkali metal silicate is used as an activator, low water-to-binder (w/b) ratio, high density, high early and final compressive strength high heat resistance and enhanced acid resistance.

The abovementioned object is achieved by the features of the independent claims. The dependent claims relate to preferred embodiments.

It was surprisingly found that the formulation of the present invention allows the production of acid and heat-resistant construction products. Moreover, it was surprisingly found that the polycondensation product of the invention works well even with alkali metal silicates as activator.

The present invention provides a formulation as disclosed in the appended claim 1.

The use of at least two inorganic binders is owed to the fact that, as taught in EP 2504296 B1, such binder systems harden in the form of a hybrid matrix which is acid-resistant, water-resistant and alkali-resistant.

The CaO content of the formulation of the invention should preferably be in the range of 2 to 40 %, more preferably 5 to 35 % and most preferably 12 to 25 %, by weight since this range appears to facilitate the formation of such hybrid matrix.

For X being the molar amount of the aromatic carboxylic acid b), there should be generally 0.1 X to 10.0 X of the aromatic compound a) and 0.6 X to 16.5 X of the aldehyde present as monomer components in the polycondensation product of the invention (the latter ratio corresponding to about 50 % excess of either the combined aromatic compounds or the aldehyde).

The formulation of the invention may contain hydraulic binder(s). These hydraulic binders can be selected from portland cements, aluminate cements, sulfoaluminate cements, and mixtures thereof, and the content of portland cements, aluminate cements and/or sulfoaluminate cements in the binder system is ≤ 30% by weight, preferably ≤ 20% by weight and in particular ≤ 10% by weight. If the amount of the hydraulic binder(s) is too high, the formation of a desired hybrid matrix may no longer be possible.

The term "% by weight" as used throughout this specification is based on the total amount of binders, activators and polycondensation products as defined hereinabove, each calculated as dry substance. With other words, percentages are based on the "water-free formulation". In the formulation of the invention the latent hydraulic binder can be selected from blast furnace slag, granulated blast furnace slag, ground granulated blast furnace slag, electrothermal phosphorus slag, steel slag and mixtures thereof.

In the context of the present invention, a latent hydraulic binder is preferably to be understood as meaning a binder in which the molar (CaO + MgO):SiO₂ ratio is between 0.8 and 2.5 and particularly preferably between 1.0 and 2.0. In particular, the latent hydraulic binder is selected from blast furnace slag, slag sand, ground slag, electrothermal phosphorus slag and steel slag.

Blast furnace slag is a waste product of the blast furnace process. It may be granulated ("granulated blast furnace slag") or finely pulverized ("ground granulated blast furnace slag"). The ground granulated blast furnace slag varies in its fineness of grinding and particle size distribution according to origin and preparation form, the fineness of grinding having an influence on the reactivity. The so-called Blaine value, which is typically of the order of magnitude of 200 to 1000, often between 300 and 500 m² kg⁻¹, is used as a characteristic for the fineness of milling. A typical composition of blast furnace slag was mentioned hereinabove.

Electrothermal phosphorus slag is a waste product of electrothermal phosphorus production. It is less reactive than blast furnace slag and contains about 45 to 50% by weight of CaO, about 0.5 to 3% by weight of MgO, about 38 to 43% by weight of SiO₂, about 2 to 5% by weight of Al₂O₃ and about 0.2 to 3% by weight of Fe₂O₃ as well as fluoride and phosphate.

Steel slag is a waste product of various steel production processes with strongly varying composition (cf. Caijun Shi, Pavel V. Krivenko, Della Roy, Alkali-Activated Cements and Concretes, Taylor & Francis, London & New York, 2006, pages 42-51).

In the formulation of the invention the pozzolanic binder can be selected from precipitated silica, pyrogenic silica, microsilica, glass powder, brown coal fly ash, mineral coal fly ash, rice husk ash, metakaolin, volcanic ash, tuff, trass, pozzolana and zeolites and mixtures thereof.

The test for pozzolanic activity can be effected according to DIN EN 196 part 5. An overview of pozzolans suitable according to the invention is to be found in Caijun Shi, Pavel V. Krivenko, Della Roy, Alkali-Activated Cements and Concretes, Taylor & Francis, London & New York, 2006, pages 51-60, and pages 61-63.

The silica according to the invention as a rule has a content of at least 80% by weight, preferably at least 90% by weight, of SiO₂. Precipitated silica is obtained industrially via precipitation processes starting from waterglass. Precipitated silica is also referred to as silica gel, depending on the production process. Pyrogenic silica is produced by reacting chlorosilanes, such as, for example, silicon tetrachloride, in an oxyhydrogen flame. Pyrogenic silica is an amorphous SiO₂ powder having a particle diameter of 5 to 50 nm and a specific surface area of 50 to 600 m²g⁻¹.

Microsilica (also referred to as silica fume) is a by-product of silicon or ferrosilicon production and likewise comprises for the most part amorphous SiO₂ powder. The particles have diameters of the order of magnitude of 0.1 µm. The specific surface area is of the order of magnitude of 20 to 25 m²g⁻¹ (cf. Caijun Shi, Pavel V. Krivenko, Della Roy, Alkali-Activated Cements and Concretes, Taylor & Francis, London & New York, 2006, pages 60-61). Glass powder, for the purpose of the present invention, reacts similar to amorphous SiO₂ powder. In contrast, commercially available quartz sand is crystalline, has comparatively large particles and a comparatively small specific surface area. It serves according to the invention merely as an inert aggregate.

Metakaolin forms in the dehydration of kaolin. While kaolin releases physically bound water at 100 to 200°C, a dehydroxylation takes place at 500 to 800°C or above with a collapse of the lattice structure and formation of metakaolin (Al₂Si₂O₇). Pure metakaolin accordingly contains about 54% by weight of SiO₂ and about 46% by weight of Al₂O₃. Fly ashes form, inter alia, in the combustion of coal in power stations. According to WO 08/012438, fly ash of class C contains about 10% by weight of CaO while fly ashes of class F contain less than 8% by weight, preferably less than 4% by weight and typically about 2% by weight of CaO.

In the formulation of the invention the ratio of the first inorganic binder to the second inorganic binder should preferably be from 1:50 to 50:1 by weight, more preferably from 1:10 to 10:1 by weight.

The alkali metal silicate is preferably a waterglass. In the case of liquid (i.e. aqueous) waterglasses, the abovementioned percentages by weight are calculated on the basis of the solids contents of these waterglasses, which as a rule are 20% by weight to 60% by weight, preferably 30% to 50% by weight, of the liquid waterglass.

According to the invention, at least two activators are present in the formulation, characterized in that the first activator is selected from powdered alkali metal silicates, wherein the alkali metal silicate is selected from compounds having the empirical formula m SiO₂ · nM₂O, in which the alkali metal M represents Li, Na or K, or a mixture thereof, preferably Na and/or K, and the molar ratio m:n is from 1.0 to 4.0, preferably 1.0 to 3.8 and in particular 2.0 to 3.6, and the second activator is selected from alkali metal carbonates, alkali metal hydroxides, alkali metal aluminates, alkali metal sulfates, and mixtures thereof, the alkali metal having the above meaning, and preferably from alkali metal hydroxides such as NaOH, KOH and mixtures thereof. Again, even in case that the second activator is used in liquid (i.e. aqueous) form, the amounts thereof are calculated on the basis of its solid content.

In the formulation of the invention the ratio of the powdered alkali metal silicate to the second activator should preferably be from 1:100 to 100:1 by weight, more preferably from 1:10 to 10:1 even more preferably from 1:5 to 5:1 and most preferably from 1:3 to 3:1, by weight. Inert fillers and/or further additives may additionally be comprised in the formulation of the invention. The inert fillers and/or further additives are not counted as constituents of the formulation. These optional components can either be present in the formulation or can be added later on upon the preparation of a mortar or concrete.

Generally known gravels, sands and/or powders, for example based on quartz, limestone, barite, basalt or clay, in particular quartz sand, are suitable as inert fillers. Light fillers, such as perlite, kieselguhr (diatomaceous earth), exfoliated mica (vermiculite) and foamed sand, can also be used.

Suitable additives are, for example, generally known flow agents, antifoams, air entrainers, water retention agents, plasticizers, pigments, fibers, dispersion powders, wetting agents, retardants, accelerators, complexing agents, aqueous dispersions and rheology modifiers. More specifically, the additives can be selected from glycols, polyalcohols, organic acids, amino acids, sugars, molasses, lignosulfonate, organic and inorganic salts, polycarboxylate ethers, naphthalenesulfonate, melamine/formaldehyde polycondensation products, and also mixtures thereof.

According to the invention the polycondensation product comprises as monomer components:
a) at least one aromatic compound of the formula

   Ar-O-CHR₁-CHR₂-(O-CHR₁-CHR₂)ₘ-R₃,

   wherein
   - Ar: is an aryl group,
   - R₁ and R₂: each independently of one another are selected from H, methyl and ethyl, with preferably at least one of the groups R₁ and R₂ being H,
   - m: is an integer from 0 to 300, and
   - R₃: is selected from OH, alkoxy, aryloxy, arylalkoxy, alkylaryloxy, phosphate, phosphonate, sulfate, sulfonate, carboxylate, and mixtures thereof;
b) at least one aromatic carboxylic acid, which is salicylic acid;
c) at least one aldehyde.

In the above definition Ar is preferably an aryl group having 6 to 10 carbon atoms in the ring system, and more particularly is a phenyl group or a naphthyl group.

Both R₁ and R₂ may represent H. The index m can be an integer from 0 to 280, preferably from 10 to 160 and more particularly from 12 to 120. Another preferred range of m is 0 to 43 (corresponding to PhPEG2000), more preferred 0 to 20 (corresponding to PhPEG1000).

In the polycondensation product of the invention R₃ can selected from the group consisting of OH, C₁₋₁₀-alkoxy, C₆₋₁₀-aryloxy, C₇₋₁₁-arylalkoxy, C₇₋₁₁-alkylaryloxy, phosphate and mixtures thereof.

Moreover, the aldehyde can be selected from the group consisting of formaldehyde, paraformaldehyde, glyoxylic acid, benzaldehyde, benzaldehydesulfonic acid, benzaldehydedisulfonic acid, vanillin, isovanillin, and also mixtures thereof.

The polycondensation product of the invention has preferably the form of a comb polymer, wherein the main chain exhibits a novolak structure, e.g. (-CH₂-Ar-)ₙ in the case of formaldehyde).

The polycondensation product of the invention can have a molecular weight in the range of from 1000 to 100 000, preferably 2000 to 75 000 and more particularly 4000 to 50 000 g/mol. Finally, the present invention provides the use of the formulation as defined hereinabove for the production of an acid-resistant and/or a heat-resistant construction product.

The present invention is now elucidated with greater precision by means of the examples below.

### EXAMPLES

### Sample Preparation:

The starting materials were mixed in a laboratory mortar mixing device according to DIN EN 196-1. Mixing was carried out as described in DIN EN 196-1, except that the quartz sand was first placed in the mixing vessel. Sodium hydroxide dissolved in the mixing water was used as one alkaline activator. Melflux DF 93 (4 wt.-% solids, based on the dispersant, of an aqueous emulsion of polyalkylene glycols, modified with polycarboxylate ethers, of BASF SE) was used as a defoamer. The dispersants were used in aqueous solution.

The dispersant was prepared according to the modified procedure from the Example 30 of WO 2013/152963 A1. 787.5 weight parts of poly(ethyleneoxide) monophenyl ether (number average molecular weight Mn = 750 g/mol) and 145.07 parts of 2-phenoxyethanol were placed into a heatable glass reactor equipped with mechanical stirrer, reflux condenser and dosage pump. 231 parts of polyphosphoric acid were added to the reaction mixture under vigorous stirring over 25 min, while the temperature of reaction mixture was maintained below 30°C, followed by heating of the resulting mixture at 95°C for 1 hour. Thereafter 290.05 parts of 2-hydroxybenzoic acid, 139.38 parts of paraformaldehyde and 150 parts of water were added under stirring and constant nitrogen flow, followed by the adjustment of the reaction temperature to 90°C. 201.81 parts of methanesulfonic acid (70% aqueous solution) were dosed to the reaction mixture over 1 hour under maintaining the reaction temperature below 110°C, followed by further heating and stirring the reaction mixture at ca. 100-105°C over 2 hours. The reaction was stopped by the addition of 2911 parts of cold water and subsequently neutralized with 680 parts NaOH (50% aqueous solution) to pH value ∼ 7. The resulting polymer solution was analyzed by gel permeation chromatography (GPC) (PEG/PEO calibration, RI detection, column combination OH-Pak SB-G, OH-20 Pak SB 804 HQ und OH-Pak SB 802.5 HQ from Shodex, Japan; eluent 80 Vol.-% aqueous ammonium formate solution (0.05 mol/l) and 20 Vol.-% acetonitrile; injection volume 100 µl; flow rate 0.5 ml/min). GPC Data: Mw = 11.2 kDa; Mn = 6.1 kDa; PDI = 1.8.

### Chemical Resistance Tests:

Mixtures as described below were used for chemical resistance tests. After six minutes of resting, the mortars were again stirred and applied to forms that were impressed in a silicone mat, thus giving cylindrical specimen of 25 mm diameter and 25 mm height. The specimen were removed from the forms after 24 hours of storage (23 °C, 50% rel. hum.) and subsequently stored for 27 days (23 °C, 50% rel. hum.). After a total of 28 days the specimen were tested for chemical resistance.

Chemical resistance tests were carried out by weighing a specimen and placing it in a plastic bottle (250 ml) that was filled with 200 ml of a medium. 50 g of coarse quartz sand was additionally placed inside that bottle. The bottle was subsequently rotated for 2.5 hours in an overhead mixer. This simulates an accelerated attack of the specimen by the medium through mechanical wear. The specimen was then removed from the bottle, dried and weighted again. The percentage of mass loss during the test was used to assess the resistance of the specimen. The resistance was assessed in three different media: water, H₂SO₄ (pH=2) und lactic acid (pH=2).

### Example 1

Four different mortars were prepared, i.e. reference mortars M1.1 and M2.1 (without dispersant) and mortars M1.2 and M2.2 (with dispersant and thus less water). The formulations are given in Table 1 and 2. The spread was measured after 6 and 30 minutes, applying each time 15 lifts on a Hägermann table after removing the conus (DIN EN 1015-3). The compressive strength values after 7 and 28 days (DIN EN 197-1) (prisms of 40x40x160 mm) are also listed in Tables 1 and 2.

**Table 1:**

| | | |
|---|---|---|
| Starting Materials | M1.1 | M1.2 |
| Fly ash (class F) [g] | 675 | 675 |
| CEM I [g] | 75 | 75 |
| Quartz sand [g] | 900 | 900 |
| NaOH aq. [g] (solid content) | 37,5 | 37,5 |
| Na metasilicate pentahydrate [g] | 3,75 | 3,75 |
| Dispersant [g] (solid content) | 0 | 15 |
| Water [g] | 270 | 225 |
| Spread after 6 min [cm] | 15,3 | 30,0 |
| Spread after 30 min [cm] | 11,0 | 30,0 |
| Compress. strength [MPa] (7 d) | 5,3 | 9,5 |
| Compress. strength [MPa] (28 d) | 8,4 | 21,3 |

**Table 2:**

| | | |
|---|---|---|
| Starting Materials | M2.1 | M2.2 |
| Blast furnace slag [g] | 675 | 675 |
| Metakaolin [g] | 75 | 75 |
| Quartz sand [g] | 900 | 900 |
| NaOH aq. [g] (solid content) | 15 | 15 |
| K waterglass powder [g] (mod. 4) | 37,5 | 37,5 |
| Dispersant [g] (solid content) | 0 | 3,75 |
| Water [g] | 300 | 232,5 |
| Spread after 6 min [cm] | 14,0 | 30,0 |
| Spread after 30 min [cm] | 10,5 | 27,1 |
| Compress. strength [MPa] (7d) | 10,2 | 33,4 |
| Compress. strength [MPa] (28 d) | 11,6 | 37,4 |

The chemical resistance (i.e. the weight loss) of specimen cured for 28 days are given in Table 3 hereinbelow. Especially the chemical resistance in acids is significantly improved for the formulations M1.2 und M2.2.

**Table 3:**

| Medium | M1.1 | M1.2 | M2.1 | M2.2 |
|---|---|---|---|---|
| H₂SO₄ | 24,5% | 9,2% | 0,9% | 0,9% |
| Lactic acid | 64,0% | 27,6% | 9,5% | 7,1% |
| Water | 7,8% | 2,1% | 1,1% | 0,2% |

### Example 2

Cylindrical specimens of 25 mm diameter and 25 mm height were used for testing of heat resistance. Samples of M1.2 and M2.2, after 35 days of curing, were heat treated to 400°C for half an hour (heating rate 2 K/min) and cooled down. Compressive strength was measured after cooling. Table 4 summarizes compressive strength values of samples before and after heat treatment. The samples had essentially maintained their strengths during heating.

**Table 4:**

| Samples | M1.2 | M2.2 |
|---|---|---|
| Compressive strength before heating [MPa] | 20.4 | 38.9 |
| Compressive strength after heating [MPa] | 15.7 | 31.0 |

## Claims

1. A formulation comprising:
at least two inorganic binders, wherein the first inorganic binder is selected from hydraulic binders, latent hydraulic binders, and mixtures thereof, and the second inorganic binder is selected from pozzolanic binders;
at least two activators **characterized in that** the first activator is selected from powdered alkali metal silicates, wherein the alkali metal silicate is selected from compounds having the empirical formula m SiO₂ · n M₂O, in which the alkali metal M represents Li, Na or K, or a mixture thereof, preferably Na and/or K, and the molar ratio m:n is from 1.0 to 4.0, preferably 1.0 to 3.8 and in particular 2.0 to 3.6, and the second activator is selected from alkali metal carbonates, alkali metal hydroxides, alkali metal aluminates, alkali metal sulfates, and mixtures thereof, wherein the alkali metal has the above meaning; and
at least one polycondensation product comprising as monomer components:
a) at least one aromatic compound of the formula
Ar-O-CHR₁-CHR₂-(O-CHR₁-CHR₂)ₘ-R₃,
wherein
Ar is an aryl group,
R₁ and R₂ each independently of one another are selected from H, methyl and ethyl, with preferably at least one of the groups R₁ and R₂ being H,
m is an integer from 0 to 300, and
R₃ is selected from OH, alkoxy, aryloxy, arylalkoxy, alkylaryloxy, phosphate, phosphonate, sulfate, sulfonate, carboxylate, and mixtures thereof;
b) at least one aromatic carboxylic acid, which is salicylic acid;
c) at least one aldehyde.

2. The formulation of claim 1, wherein the hydraulic binder is selected from portland cement, aluminate cement, sulfoaluminate cements, and mixtures thereof, and the content of portland cement, aluminate cement and/or sulfoaluminate cement in the binder system is ≤ 30% by weight, preferably ≤ 20% by weight and in particular ≤ 10% by weight.

3. The formulation of Claim 1, wherein the latent hydraulic binder is selected from blast furnace slag, granulated blast furnace slag, ground granulated blast furnace slag, electrothermal phosphorus slag, steel slag and mixtures thereof.

4. The formulation of Claim 1, wherein the pozzolanic binder is selected from precipitated silica, pyrogenic silica, microsilica, glass powder, brown coal fly ash, mineral coal fly ash, rice husk ash, metakaolin, volcanic ash, tuff, trass, pozzolana and zeolites and mixtures thereof.

5. The formulation of claim 1, wherein the ratio of the first inorganic binder to the second inorganic binder is from 1:50 to 50:1 by weight, preferably from 1:10 to 10:1 by weight.

6. The formulation of claim 1, wherein the ratio of the powdered alkali metal silicate to the second activator is from 1:100 to 100:1 by weight, preferably from 1:10 to 10:1 by weight.

7. The formulation of Claims 1 to 6, additionally comprising inert fillers and/or further additives.

8. The formulation of Claim 1, wherein Ar is an aryl group having 6 to 10 carbon atoms in the ring system, and more particularly is a phenyl group or a naphthyl group.

9. The formulation of Claim 1, wherein both R₁ and R₂ are H.

10. The formulation of Claim 1, wherein m is an integer from 0 to 280, preferably from 10 to 160 and more particularly from 12 to 120.

11. The formulation of Claim 1, wherein R₃ is selected from the group consisting of OH, C₁₋₁₀-alkoxy, C₆₋₁₀-aryloxy, C₇₋₁₁-arylalkoxy, C₇₋₁₁-alkylaryloxy, phosphate and mixtures thereof.

12. The formulation of Claim 1, wherein the aldehyde is selected from the group consisting of formaldehyde, paraformaldehyde, glyoxylic acid, benzaldehyde, benzaldehydesulfonic acid, benzaldehydedisulfonic acid, vanillin, isovanillin, and also mixtures thereof.

13. The formulation of Claim 1, wherein the polycondensation product is in the form of a comb polymer having a novolak structure.

14. The formulation of Claim 13, wherein the polycondensation product has a molecular weight in the range from 1000 to 100 000, preferably 2000 to 75 000 and more particularly 4000 to 50 000 g/mol.

15. Use of the formulation of any of the Claims 1 to 14 for the production of an acid-resistant construction product.

16. Use of the formulation of any of the Claims 1 to 14 for the production of a heat-resistant construction product.

## Patentansprüche

1. Formulierung, die Folgendes umfasst:
mindestens zwei anorganische Bindemittel, wobei das erste anorganische Bindemittel aus hydraulischen Bindemitteln, latent hydraulischen Bindemitteln und Mischungen davon ausgewählt ist und das zweite inorganische Bindemittel aus puzzolanischen Bindemitteln ausgewählt ist;
mindestens zwei Aktivatoren, die **dadurch gekennzeichnet sind, dass** der erste Aktivator aus pulverisierten Alkalimetallsilicaten ausgewählt ist, wobei das Alkalimetallsilicat aus Verbindungen mit der empirischen Formel m SiO₂ ^{∗} n M₂O ausgewählt ist, in der das Alkalimetall M für Li, Na oder K oder eine Mischungen davon, vorzugsweise Na und/oder K, steht und das Molverhältnis m:n 1,0 bis 4,0, vorzugsweise 1,0 bis 3,8 und insbesondere 2,0 bis 3,6, beträgt und der zweite Aktivator aus Alkalimetallcarbonaten, Alkalimetallhydroxiden, Alkalimetallaluminaten, Alkalimetallsulfaten und Mischungen davon ausgewählt ist, wobei das Alkalimetall die oben genannte Bedeutung besitzt, und
mindestens ein Polykondensationsprodukt, das als Monomerkomponenten Folgende umfasst:
a) mindestens eine aromatische Verbindung der Formel
Ar-O-CHR₁-CHR₂-(O-CHR₁-CHR₂)ₘ-R₃,
wobei
Ar für eine Arylgruppe steht,
R₁ und R₂ jeweils unabhängig voneinander aus H, Methyl und Ethyl ausgewählt sind, wobei mindestens eine der Gruppen R₁ und R₂ vorzugsweise für H steht, m für eine ganze Zahl von 0 bis 300 steht und
R₃ aus OH, Alkoxy, Aryloxy, Arylalkoxy, Alkylaryloxy, Phosphat, Phosphonat, Sulfat, Sulfonat, Carboxylat und Mischungen davon ausgewählt ist;
b) mindestens eine aromatische Carbonsäure, die Salicylsäure ist;
c) mindestens ein Aldehyd.

2. Formulierung nach Anspruch 1, wobei das hydraulische Bindemittel aus Portlandzement, Aluminatzement, Sulfoaluminatzementen und Mischungen davon ausgewählt ist und der Gehalt an Portlandzement, Aluminatzement und/oder Sulfoaluminatzement in dem Bindemittelsystem ≤ 30 Gew.-%, vorzugsweise ≤ 20 Gew.-% und insbesondere ≤ 10 Gew.-% beträgt.

3. Formulierung nach Anspruch 1, wobei das latent hydraulische Bindemittel aus Hüttensand, granuliertem Hüttensand, Hüttensandmehl, elektrothermischer Phosphorschlacke, Edelstahlschlacke und Mischungen davon ausgewählt ist.

4. Formulierung nach Anspruch 1, wobei das puzzolanische Bindemittel aus Fällungskieselsäure, pyrogener Kieselsäure, Mikrosilika, Glasmehl, Braunkohleflugasche, Steinkohleflugasche, Reisschalenasche, Metakaolin, Vulkanasche, Tuff, Trass, Puzzolanerde und Zeolithen und Mischungen davon ausgewählt ist.

5. Formulierung nach Anspruch 1, wobei das Verhältnis des ersten anorganischen Bindemittels zu dem zweiten anorganischen Bindemittel 1:50 bis 50:1, bezogen auf das Gewicht, vorzugsweise 1:10 bis 10:1, bezogen auf das Gewicht, beträgt.

6. Formulierung nach Anspruch 1, wobei das Verhältnis des pulverisierten Alkalimetallsilicats zu dem zweiten Aktivator 1:100 bis 100:1, bezogen auf das Gewicht, vorzugsweise 1:10 bis 10:1, bezogen auf das Gewicht, beträgt.

7. Formulierung nach den Ansprüchen 1 bis 6, zusätzlich umfassend inerte Füllstoffe und/oder weitere Additive.

8. Formulierung nach Anspruch 1, wobei Ar für eine Arylgruppe mit 6 bis 10 Kohlenstoffatomen im Ringsystem steht und noch spezieller für eine Phenylgruppe oder eine Naphthylgruppe steht.

9. Formulierung nach Anspruch 1, wobei sowohl R₁ als auch R₂ für H stehen.

10. Formulierung nach Anspruch 1, wobei m für eine ganze Zahl von 0 bis 280, vorzugsweise von 10 bis 160 und noch spezieller für 12 bis 120 steht.

11. Formulierung nach Anspruch 1, wobei R₃ aus der Gruppe bestehend aus OH, C₁₋₁₀-Alkoxy, C₆₋₁₀-Aryloxy, C₇₋₁₁-Arylalkoxy, C₇₋₁₁-Alkylaryloxy, Phosphat und Mischungen davon ausgewählt ist.

12. Formulierung nach Anspruch 1, wobei das Aldehyd aus der Gruppe bestehend aus Formaldehyd, Paraformaldehyd, Glyoxylsäure, Benzaldehyd, Benzaldehydsulfonsäure, Benzaldehyddisulfonsäure, Vanillin, Isovanillin und auch Mischungen davon ausgewählt ist.

13. Formulierung nach Anspruch 1, wobei das Polykondensationsprodukt in der Form eines Kammpolymers mit einer Novolakstruktur vorliegt.

14. Formulierung nach Anspruch 13, wobei das Polykondensationsprodukt ein Molekulargewicht im Bereich von 1000 bis 100.000, vorzugsweise 2000 bis 75.000 und noch spezieller 4000 bis 50.000 g/mol aufweist.

15. Verwendung der Formulierung nach einem der Ansprüche 1 bis 14 zur Herstellung eines säurebeständigen Bauprodukts.

16. Verwendung der Formulierung nach einem der Ansprüche 1 bis 14 zur Herstellung eines hitzebeständigen Bauprodukts.

## Revendications

1. Formulation comprenant :
au moins deux liants inorganiques, le premier liant inorganique étant choisi parmi des liants hydrauliques, des liants hydrauliques latents, et des mélanges correspondants, et le deuxième liant inorganique étant choisi parmi des liants pouzzolaniques ;
au moins deux activateurs **caractérisés en ce que** le premier activateur est choisi parmi des silicates de métal alcalin pulvérulents, le silicate de métal alcalin étant choisi parmi des composés possédant la formule empirique m SiO₂.n M₂O, dans laquelle le métal alcalin M représente Li, Na ou K, ou un mélange correspondant, préférablement Na et/ou K, et le rapport molaire m:n est de 1,0 à 4,0, préférablement 1,0 à 3,8 et en particulier 2,0 à 3,6, et le deuxième activateur est choisi parmi les carbonates de métal alcalin, les hydroxydes de métal alcalin, les aluminates de métal alcalin, les sulfates de métal alcalin, et des mélanges correspondants, le métal alcalin possédant la signification ci-dessus ; et
au moins un produit de polycondensation comprenant en tant que composants de monomères :
a) au moins un composé aromatique de formule
**Ar-O-CHR₁-CHR₂-(O-CHR₁-CHR₂)ₘ-R₃,**
Ar étant un groupe aryle,
R₁ et R₂, chacun indépendamment l'un de l'autre, étant choisis parmi H, méthyle et éthyle, avec préférablement au moins un des groupes R₁ et R₂ qui est H,
m étant un entier de 0 à 300, et
R₃ étant choisi parmi OH, alcoxy, aryloxy, arylalcoxy, alkylaryloxy, phosphate, phosphonate, sulfate, sulfonate, carboxylate, et des mélanges correspondants ;
b) au moins un acide carboxylique aromatique, qui est l'acide salicylique ;
c) au moins un aldéhyde.

2. Formulation selon la revendication 1, le liant hydraulique étant choisi parmi du ciment Portland, du ciment aluminate, des ciments sulfoaluminates, et des mélanges correspondants, et la teneur en ciment Portland, en ciment aluminate et/ou en ciment sulfoaluminate dans le système de liant étant ≤ 30 % en poids, préférablement ≤ 20 % en poids et en particulier ≤ 10 % en poids.

3. Formulation selon la revendication 1, le liant hydraulique latent étant choisi parmi le laitier de haut-fourneau, le laitier de haut-fourneau granulé, le laitier de haut-fourneau granulé broyé, le laitier de phosphore électrothermique, le laitier d'acier et des mélanges correspondants.

4. Formulation selon la revendication 1, le liant pouzzolanique étant choisi parmi la silice précipitée, la silice pyrogénique, la microsilice, la poudre de verre, les cendres volantes de lignite, les cendres volantes de charbon minéral, les cendres de balles de riz, le métakaolin, les cendres volcaniques, le tuf, le trass, la pouzzolane et les zéolithes et des mélanges correspondants.

5. Formulation selon la revendication 1, le rapport du premier liant inorganique au deuxième liant inorganique étant de 1:50 à 50:1 en poids, préférablement de 1:10 à 10:1 en poids.

6. Formulation selon la revendication 1, le rapport du silicate de métal alcalin pulvérulent au deuxième activateur étant de 1:100 à 100:1 en poids, préférablement de 1:10 à 10:1 en poids.

7. Formulation selon les revendications 1 à 6, comprenant de plus des charges inertes et/ou des additifs supplémentaires.

8. Formulation selon la revendication 1, Ar étant un groupe aryle possédant 6 à 10 atomes de carbone dans le système cyclique, et plus particulièrement étant un groupe phényle ou un groupe naphtyle.

9. Formulation selon la revendication 1, à la fois R₁ et R₂ étant H.

10. Formulation selon la revendication 1, m étant un entier de 0 à 280, préférablement de 10 à 160 et plus particulièrement de 12 à 120.

11. Formulation selon la revendication 1, R₃ étant choisi dans le groupe constitué par OH, C₁₋₁₀-alcoxy, C₆-₁₀-aryloxy, C₇₋₁₁-arylalcoxy, C₇₋₁₁-alkylaryloxy, phosphate et des mélanges correspondants.

12. Formulation selon la revendication 1, l'aldéhyde étant choisi dans le groupe constitué par le formaldéhyde, le paraformaldéhyde, l'acide glyoxylique, le benzaldéhyde, l'acide benzaldéhydesulfonique, l'acide benzaldéhydedisulfonique, la vanilline, l'isovanilline, et également des mélanges correspondants.

13. Formulation selon la revendication 1, le produit de polycondensation se trouvant sous la forme d'un polymère en peigne possédant une structure de novolak.

14. Formulation selon la revendication 13, le produit de polycondensation possédant un poids moléculaire dans la plage de 1 000 à 100 000, préférablement 2 000 à 75 000 et plus particulièrement 4 000 à 50 000 g/mole.

15. Utilisation de la formulation selon l'une quelconque des revendications 1 à 14 pour la production d'un produit de construction résistant à l'acide.

16. Utilisation de la formulation selon l'une quelconque des revendications 1 à 14 pour la production d'un produit de construction résistant à la chaleur.
